# EUROPÄISCHE PATENTSCHRIFT

(11) **EP 2 651 715 B1**
(45) Veröffentlichungstag und Bekanntmachung des Hinweises auf die Patenterteilung: **28.10.2020**
(21) Anmeldenummer: 11779407.3
(22) Anmeldetag: 07.11.2011
(51) Int. Cl.: B60S 1/40

(54) **WISCHVORRICHTUNG**
WIPER DEVICE
DISPOSITIF D'ESSUIE-GLACE

(30) Priorität: 13.12.2010 DE 102010062933
(43) Veröffentlichungstag der Anmeldung: 23.10.2013
(73) Patentinhaber: Robert Bosch GmbH, 70442 Stuttgart (DE)
(72) Erfinder: DEPONDT, Helmut, B-3010 Kessel-Lo (BE)
(86) Internationale Anmeldenummer: PCT/EP2011/069549
(87) Internationale Veröffentlichungsnummer: WO 2012/079843

(56) Entgegenhaltungen:
- DE-A1-102007 058 091
- DE-U1-202004 012 300
- FR-A1- 2 781 741

## Beschreibung

### Stand der Technik

Die Erfindung geht aus von einer Wischblattadaptereinheit nach dem Oberbegriff des Patentanspruchs 1.

Es ist bereits eine Wischvorrichtung für eine Kraftfahrzeugscheibe, mit einer Wischarmadaptereinheit und einer Wischblattadaptereinheit, die in einem montierten Zustand einen Formschluss bilden, bekannt (siehe z.B. Dokument DE202004012300U U1).

### Offenbarung der Erfindung

Die Erfindung geht aus von einer Wischblattadaptereinheit für eine Kraftfahrzeugscheibe die mit einer Wischarmadaptereinheit in einem montierten Zustand einen Formschluss bilden kann, die eine Längsführungseinheit zur Führung der Wischarmadaptereinheit aufweist.

Es wird vorgeschlagen, dass die Wischblattadaptereinheit ein beweglich gelagertes Arretierungsmittel aufweist, das dazu vorgesehen ist, die Wischarmadaptereinheit im montierten Zustand in ihrer Bewegungsfreiheit zumindest im Wesentlichen in eine Längsrichtung einzuschränken, wodurch eine besonders einfache Montage der Wischarmadaptereinheit mit der Wischblattadaptereinheit erreicht werden kann. Unter einer "Wischblattadaptereinheit" soll in diesem Zusammenhang insbesondere eine Adaptereinheit verstanden werden, die einen Kontaktbereich zu einem Wischblattbauteil aufweist und mit dem Wischblattbauteil unverlierbar verbunden und dazu vorgesehen ist, einen Kopplungsbereich des Wischblattbauteils für eine Kopplung und/oder Kontaktierung mit der Wischarmadaptereinheit bereitzustellen. Erfindungsgemäß weist die Wischblattadaptereinheit einen Grundkörper auf, der eine Kopplungsfläche für die Kopplung und/oder Kontaktierung der Wischarmadaptereinheit bereitstellt. Unter einer "Wischarmadaptereinheit" soll in diesem Zusammenhang insbesondere eine Adaptereinheit verstanden werden, die einen Kontaktbereich zu einem Wischarmbauteil aufweist und mit dem Wischarmbauteil unverlierbar verbunden und dazu vorgesehen ist, einen Kopplungsbereich des Wischarmbauteils für eine Kopplung und/oder Kontaktierung mit der Wischblattadaptereinheit bereitzustellen. Unter "vorgesehen" soll in diesem Zusammenhang insbesondere speziell ausgestattet und/oder ausgelegt verstanden werden. Unter einem "montierten Zustand" soll in diesem Zusammenhang insbesondere ein Zustand verstanden werden, in dem die Wischblattadaptereinheit und die Wischarmadaptereinheit miteinander gekoppelt sind. Unter einer "Längsrichtung" soll in diesem Zusammenhang insbesondere eine Richtung verstanden werden, die sich zumindest im Wesentlichen parallel zu einer Haupterstreckungsrichtung der Wischblattadaptereinheit erstreckt. Unter "im Wesentlichen" soll in diesem Zusammenhang insbesondere eine Abweichung von weniger als 10° verstanden werden. Unter einer "Längsführungseinheit" soll in diesem Zusammenhang insbesondere eine Einheit verstanden werden, die dazu vorgesehen ist die Wischarmadaptereinheit relativ zur Wischblattadaptereinheit im Wesentlichen parallel zur Längsrichtung zu führen.

Erfindungsgemäß ist das Arretierungsmittel als ein Rastmittel ausgebildet, wodurch ein besonders schneller Montageablauf erreicht werden kann. Unter einem "Rastmittel" soll in diesem Zusammenhang insbesondere ein Mittel verstanden werden, das bei einem Montageablauf eine elastische Verformung erfährt.

Nach der Erfindung ist das Rastmittel einstückig mit dem Grundkörper der Wischblattadaptereinheit ausgebildet, somit kann die Wischblattadaptereinheit besonders kostengünstig hergestellt werden. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Besonders große Kräfte kann die Wischblattadaptereinheit aufnehmen, wenn das Rastmittel dazu vorgesehen ist, bei einer Montage zumindest im Wesentlichen parallel zu einer Querrichtung eines Grundkörpers der Wischblattadaptereinheit ausgelenkt zu werden. Unter einer "Querrichtung" soll in diesem Zusammenhang insbesondere eine Richtung verstanden werden, die senkrecht zur Längsrichtung und senkrecht zu einer Vertikalrichtung steht und parallel zu einer Wischebene verläuft. Unter einer "Wischebene" soll in diesem Zusammenhang insbesondere eine idealisierte Ebene verstanden werden, die von einem an der Wischblattadaptereinheit befestigten Wischblatt in einem Betriebszustand gewischt wird. Unter einer "Vertikalrichtung" soll dabei in diesem Zusammenhang insbesondere eine Richtung verstanden werden, die senkrecht zur Wischebene steht.

Weist die Wischvorrichtung eine Abdeckung auf, die in zumindest einem Betriebszustand zumindest zum Großteil von der Wischarmadaptereinheit gebildet wird, kann die Wischvorrichtung besonders einfach vor äußeren Einflüssen wie beispielsweise Wasser, geschützt werden. Unter einer "Abdeckung" soll in diesem Zusammenhang insbesondere zumindest eine die Wischvorrichtung zum Großteil umgebende Seitenwand verstanden werden, die dazu vorgesehen ist, ein Durchdringen von Gasen und/oder Flüssigkeiten zu vermeiden.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1a bis 1c: eine perspektivische Ansicht einer Wischvorrichtung in einem Montageablauf,
- Fig. 2a und 2b: eine perspektivische Ansicht eines weiteren Ausführungsbeispiels einer Wischvorrichtung in einem Montageablauf,
- Fig. 3a und 3b: eine perspektivische Ansicht eines weiteren Ausführungsbeispiels einer Wischvorrichtung in einem Montageablauf,
- Fig. 4a und 4b: eine perspektivische Ansicht eines weiteren Ausführungsbeispiels einer Wischvorrichtung in einem Montageablauf und
- Fig. 5a und 5b: eine perspektivische Ansicht eines weiteren Ausführungsbeispiels einer Wischvorrichtung in einem Montageablauf.

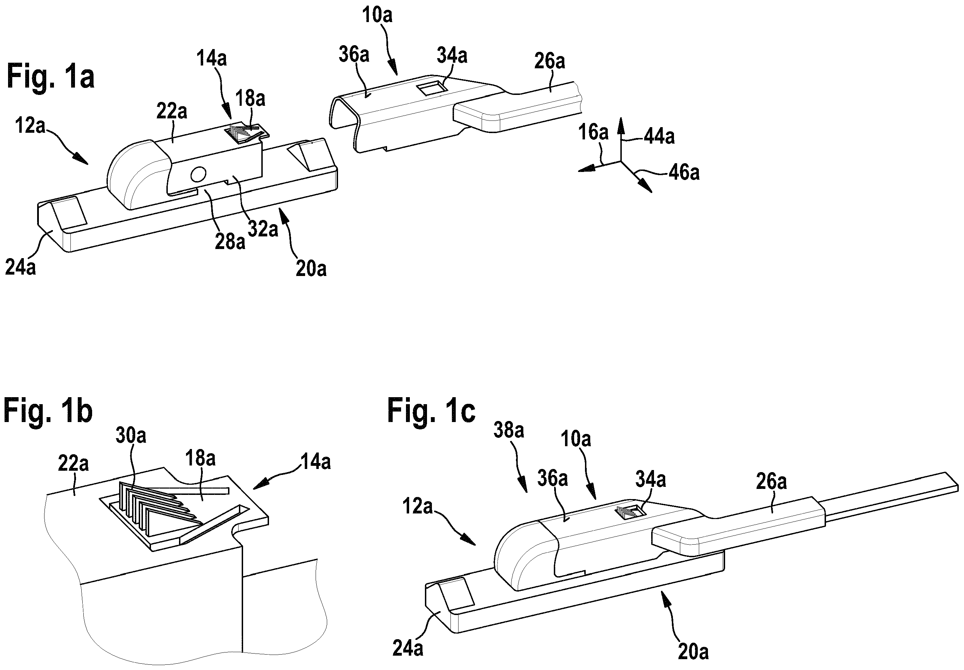

Figur 1a zeigt eine erfindungsgemäße Wischvorrichtung mit einer Wischarmadaptereinheit 10a und einer Wischblattadaptereinheit 12a in einem geöffneten Zustand.

Die Wischblattadaptereinheit 12a weist einen Grundkörper 22a auf, der mit einem Wischblatt 24a verbunden ist. Am Grundkörper 22a ist ein beweglich gelagertes Arretierungsmittel 14a angeordnet, das als Rastmittel 18a ausgebildet ist. Ferner weist der Grundkörper 22a eine Längsführungseinheit 20a auf, die eine Seitenausnehmung 28a umfasst, die sich in einer Seitenwand 32a des Grundkörpers 22a in ihrer Haupterstreckungsrichtung im Wesentlichen parallel zu einer Längsrichtung 16a erstreckt. Auf einer anderen, der Seitenwand 32a gegenüberliegenden Seite des Grundkörpers 22a ist eine weitere Seitenausnehmung (nicht dargestellt) angeordnet.

Das Rastmittel 18a ist einstückig mit dem Grundkörper 22a ausgebildet und weist einen Widerhaken 30a auf (Figur 1b), der in Längsrichtung 16a abfällt. Bei einer Montage der Wischarmadaptereinheit 10a mit der Wischblattadaptereinheit 12a wird das Rastmittel 18a von der Wischarmadaptereinheit 10a im Wesentlichen parallel zu einer Vertikalrichtung 44a ausgelenkt.

Die Wischarmadaptereinheit 10a ist einstückig mit einem Wischarm 26a ausgebildet. Es ist jedoch in diesem Zusammenhang auch denkbar, die Wischarmadaptereinheit 10a getrennt vom Wischarm 26a auszubilden und über ein geeignetes Verbindungselement miteinander zu verbinden. Die Wischarmadaptereinheit 10a weist eine Befestigungsausnehmung 34a auf, in welche das Rastmittel 18a in einem montierten Zustand eingreift (Figur 1c), und somit eine Bewegung der Wischarmadaptereinheit 10a relativ zur Wischblattadaptereinheit 12a in Längsrichtung 16a vermeidet. Ferner bildet die Wischarmadaptereinheit 10a in einem montierten Zustand mit einer sichtbaren Außenfläche 36a einen Großteil einer Abdeckung 38a der Wischvorrichtung.

Im montierten Zustand greift die Wischarmadaptereinheit 10a in die Seitenausnehmung 28a, wodurch eine Bewegung der Wischarmadaptereinheit 10a relativ zur Wischblattadaptereinheit 12a parallel zu einer Vertikalrichtung 44a vermieden wird. Die Wischarmadaptereinheit 10a liegt teilweise bündig an dem Grundkörper 22a an, wodurch insbesondere eine Bewegung der Wischarmadaptereinheit 10a relativ zur Wischblattadaptereinheit 12a parallel zu einer Querrichtung 46a vermieden wird.

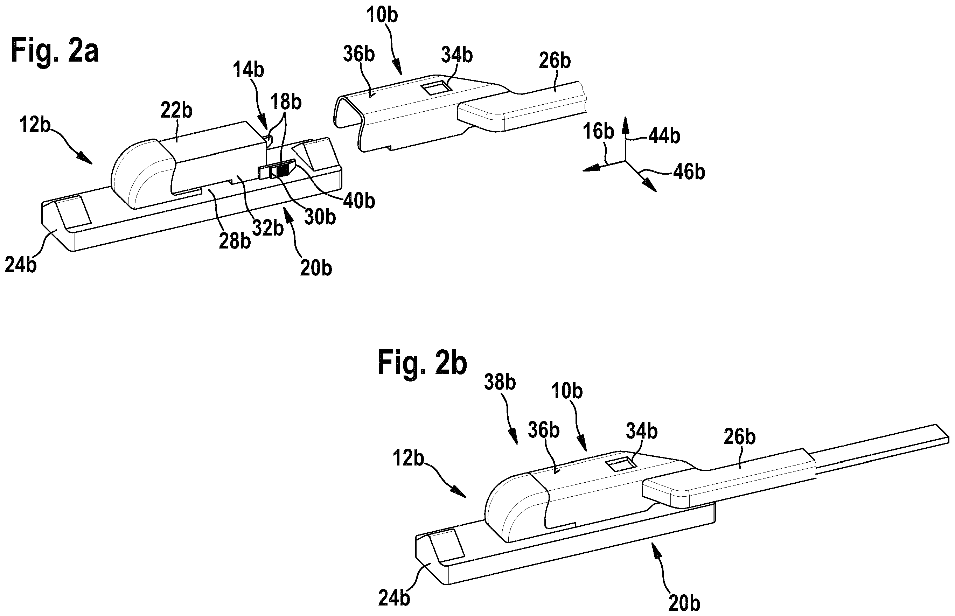

In den Figuren 2 bis 5 sind vier weitere Ausführungsbeispiele gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung des ersten Ausführungsbeispiels verwiesen werden kann. Zur Unterscheidung der Ausführungsbeispiele ist der Buchstabe a in den Bezugszeichen des Ausführungsbeispiels in der Figur 1 durch die Buchstaben b bis e in den Bezugszeichen der Ausführungsbeispiele der Figuren 2 bis 5 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des ersten Ausführungsbeispiels verwiesen werden.

Figur 2a zeigt ein weiteres Ausführungsbeispiel einer Wischvorrichtung mit einer Wischarmadaptereinheit 10b und einer Wischblattadaptereinheit 12b in einem geöffneten Zustand.

Die Wischarmadaptereinheit 10b ist einstückig mit einem Wischarm 26b ausgebildet.

Ferner bildet die Wischarmadaptereinheit 10b in einem montierten Zustand mit einer sichtbaren Außenfläche 36b einen Großteil einer Abdeckung 38b der Wischvorrichtung.

Die Wischblattadaptereinheit 12b weist einen Grundkörper 22b auf. Am Grundkörper 22b ist ein beweglich gelagertes Arretierungsmittel 14b angeordnet, das als Rastmittel 18b ausgebildet ist. Ferner weist der Grundkörper 22b eine Längsführungseinheit 20b auf, die eine Seitenausnehmung 28b beinhaltet, die sich in einer Seitenwand 32b des Grundkörpers 22b in ihrer Haupterstreckungsrichtung im Wesentlichen parallel zu einer Längsrichtung 16b erstreckt. Auf einer anderen, der Seitenwand 32b gegenüberliegenden Seite des Grundkörpers 22b ist eine weitere Seitenausnehmung (nicht dargestellt) angeordnet.

Das Rastmittel 18b ist einstückig mit dem Grundkörper 22b ausgebildet und weist einen Widerhaken 30b auf. Der Widerhaken 30b ist keilförmig ausgebildet und am Grundkörper 22b an einer Seite angeordnet, die einer Keilspitze 40b gegenüberliegt. Bei einer Montage der Wischarmadaptereinheit 10b mit der Wischblattadaptereinheit 12b wird das Rastmittel 18b von der Wischarmadaptereinheit 10b im Wesentlichen parallel zu einer Querrichtung 46b ausgelenkt.

Figur 2b zeigt die Wischvorrichtung in einem montierten Zustand. Die Wischarmadaptereinheit 10b ist auf den Grundkörper 22b der Wischblattadaptereinheit 12b geschoben. Dabei greift die Wischarmadaptereinheit 10b in die Seitenausnehmung 28b des Grundkörpers 22b und bildet mit diesem einen Formschluss. Eine Bewegung der Wischarmadaptereinheit 10b relativ zur Wischblattadaptereinheit 12b parallel zur Querrichtung 46b sowie parallel zu einer Vertikalrichtung 44b ist damit vermieden.

Das Rastmittel 18b greift hinter einen Rückanschlag (nicht dargestellt) der Wischarmadaptereinheit 10b und vermeidet damit eine Bewegung der Wischarmadaptereinheit 10b relativ zur Wischblattadaptereinheit 12b parallel zur Längsrichtung 16b.

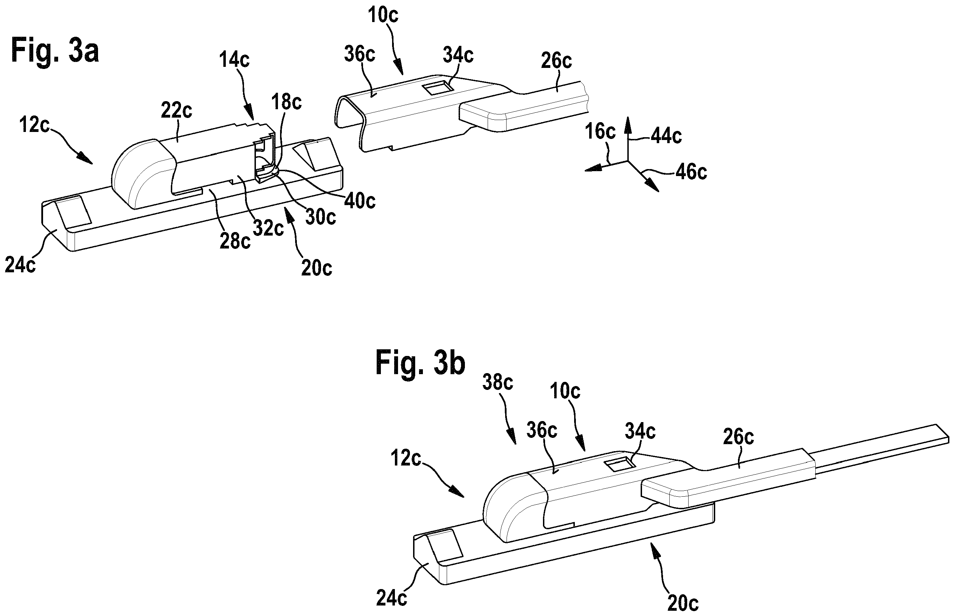

Figur 3a zeigt ein weiteres Ausführungsbeispiel einer Wischvorrichtung mit einer Wischarmadaptereinheit 10c und einer Wischblattadaptereinheit 12c in einem geöffneten Zustand.

Die Wischarmadaptereinheit 10c ist einstückig mit einem Wischarm 26c ausgebildet. Ferner bildet die Wischarmadaptereinheit 10c in einem montierten Zustand mit einer sichtbaren Außenfläche 36c einen Großteil einer Abdeckung 38c der Wischvorrichtung.

Die Wischblattadaptereinheit 12c weist einen Grundkörper 22c auf. Am Grundkörper 22c ist ein beweglich gelagertes Arretierungsmittel 14c angeordnet, das als Rastmittel 18c ausgebildet ist. Ferner weist der Grundkörper 22c eine Längsführungseinheit 20c auf, die eine Seitenausnehmung 28c beinhaltet, die sich in einer Seitenwand 32c des Grundkörpers 22c in ihrer Haupterstreckungsrichtung im Wesentlichen parallel zu einer Längsrichtung 16c erstreckt. Auf einer anderen, der Seitenwand 32c gegenüberliegenden Seite des Grundkörpers 22c ist eine weitere Seitenausnehmung (nicht dargestellt) angeordnet.

Das Rastmittel 18c ist einstückig mit dem Grundkörper 22c ausgebildet und weist einen Widerhaken 30c auf. Der Widerhaken 30c ist keilförmig ausgebildet und am Grundkörper 22c an einer Seite angeordnet, die einer Keilspitze 40c gegenüberliegt. Bei einer Montage der Wischarmadaptereinheit 10c mit der Wischblattadaptereinheit 12c wird das Rastmittel 18c von der Wischarmadaptereinheit 10c im Wesentlichen parallel zu einer Querrichtung 46c ausgelenkt.

Figur 3b zeigt die Wischvorrichtung in einem montierten Zustand. Die Wischarmadaptereinheit 10c ist auf den Grundkörper 22c der Wischblattadaptereinheit 12c geschoben. Dabei greift die Wischarmadaptereinheit 10c in die Seitenausnehmung 28c des Grundkörpers 22c und bildet mit diesem einen Formschluss. Eine Bewegung der Wischarmadaptereinheit 10c relativ zur Wischblattadaptereinheit 12c parallel zur Querrichtung 46c sowie parallel zu einer Vertikalrichtung 44c ist damit vermieden.

Das Rastmittel 18c greift hinter einen Rückanschlag (nicht dargestellt) der Wischarmadaptereinheit 10c und vermeidet damit eine Bewegung der Wischarmadaptereinheit 10c relativ zur Wischblattadaptereinheit 12c parallel zur Längsrichtung 16c.

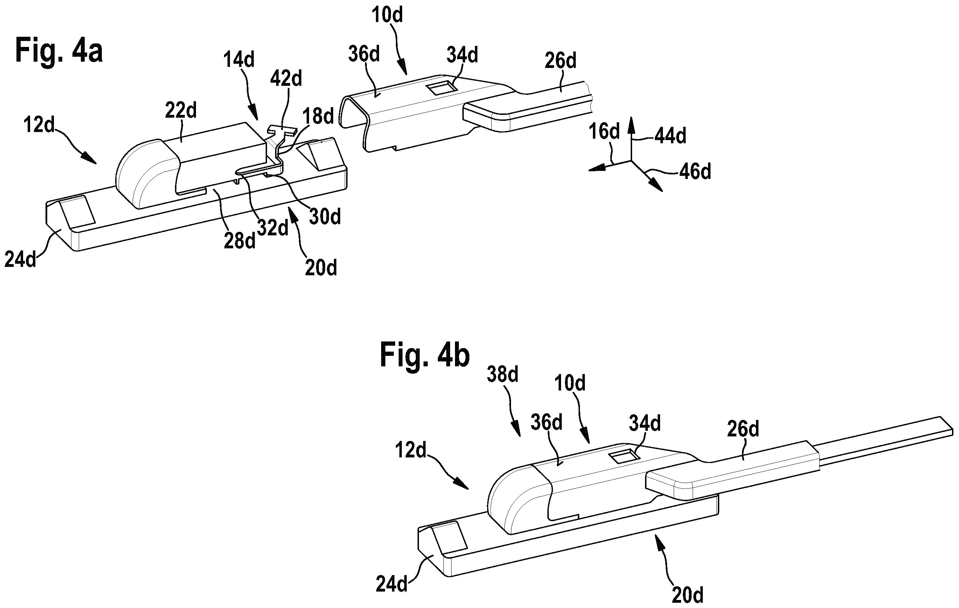

Figur 4a zeigt ein weiteres Ausführungsbeispiel einer Wischvorrichtung mit einer Wischarmadaptereinheit 10d und einer Wischblattadaptereinheit 12d in einem geöffneten Zustand.

Die Wischarmadaptereinheit 10d ist einstückig mit einem Wischarm 26d ausgebildet. Ferner bildet die Wischarmadaptereinheit 10d in einem montierten Zustand mit einer sichtbaren Außenfläche 36d einen Großteil einer Abdeckung 38d der Wischvorrichtung.

Die Wischblattadaptereinheit 12d weist einen Grundkörper 22d auf. Am Grundkörper 22d ist ein beweglich gelagertes Arretierungsmittel 14d angeordnet, das als Rastmittel 18d ausgebildet ist. Das Rastmittel 18d ist einstückig mit dem Grundkörper 22d ausgebildet und weist einen auslenkbaren plattenähnlichen Rastkörper 42d mit einem Widerhaken 30d auf. Der Widerhaken 30d ist keilförmig ausgebildet und mit dem Rastkörper 42d einstückig ausgebildet. Bei einer Montage der Wischarmadaptereinheit 10d mit der Wischblattadaptereinheit 12d wird das Rastmittel 18d von der Wischarmadaptereinheit 10d im Wesentlichen in eine Vertikalrichtung 44d ausgelenkt.

Ferner weist der Grundkörper 22d eine Längsführungseinheit 20d auf, die eine Seitenausnehmung 28d beinhaltet, die sich in einer Seitenwand 32d des Grundkörpers 22d in ihrer Haupterstreckungsrichtung im Wesentlichen parallel zu einer Längsrichtung 16d erstreckt.

Figur 4b zeigt die Wischvorrichtung in einem montierten Zustand. Die Wischarmadaptereinheit 10d ist auf den Grundkörper 22d der Wischblattadaptereinheit 12d geschoben. Dabei greift die Wischarmadaptereinheit 10d in die Seitenausnehmung 28d des Grundkörpers 22d und bildet mit diesem einen Formschluss. Eine Bewegung der Wischarmadaptereinheit 10d relativ zur Wischblattadaptereinheit 12d parallel zu einer Querrichtung 46d sowie parallel zur Vertikalrichtung 44d ist damit vermieden.

Das Rastmittel 18d greift hinter einen Rückanschlag (nicht dargestellt) der Wischarmadaptereinheit 10d und vermeidet damit eine Bewegung der Wischarmadaptereinheit 10d relativ zur Wischblattadaptereinheit 12d parallel zur Längsrichtung 16d.

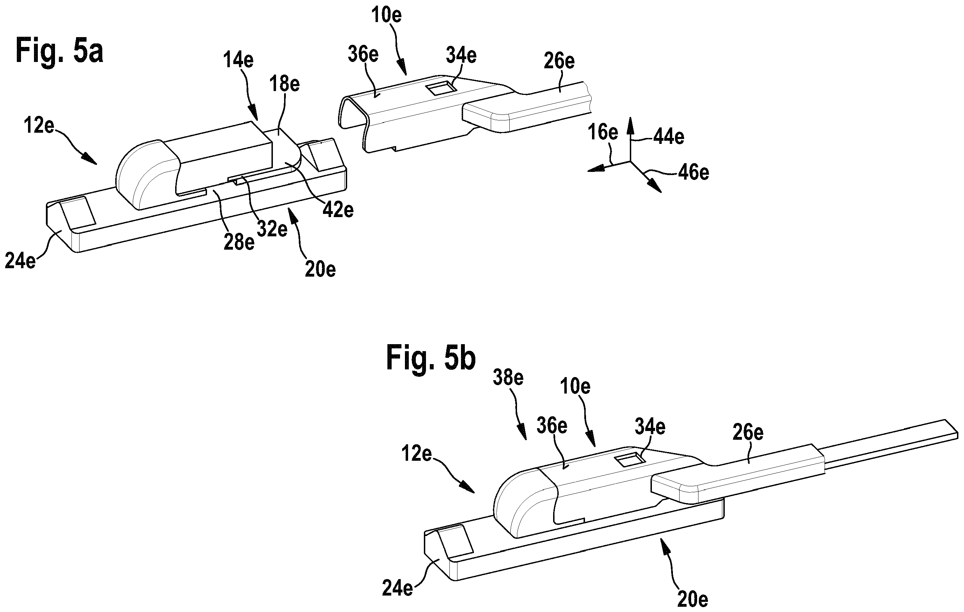

Figur 5a zeigt ein weiteres Ausführungsbeispiel einer Wischvorrichtung mit einer Wischarmadaptereinheit 10e und einer Wischblattadaptereinheit 12e in einem geöffneten Zustand.

Die Wischarmadaptereinheit 10e ist einstückig mit einem Wischarm 26e ausgebildet. Ferner bildet die Wischarmadaptereinheit 10e in einem montierten Zustand mit einer sichtbaren Außenfläche 36e einen Großteil einer Abdeckung 38e der Wischvorrichtung.

Die Wischblattadaptereinheit 12e weist einen Grundkörper 22e auf. Am Grundkörper 22e ist ein beweglich gelagertes Arretierungsmittel 14e angeordnet, das als Rastmittel 18e ausgebildet ist. Das Rastmittel 18e ist einstückig mit dem Grundkörper 22e ausgebildet und weist einen auslenkbaren plattenähnlichen Rastkörper 42e auf. Bei einer Montage der Wischarmadaptereinheit 10e mit der Wischblattadaptereinheit 12e wird das Rastmittel 18e von der Wischarmadaptereinheit 10e im Wesentlichen entgegen einer Vertikalrichtung 44e ausgelenkt.

Ferner weist der Grundkörper 22e eine Längsführungseinheit 20e auf, die eine Seitenausnehmung 28e beinhaltet, die sich in einer Seitenwand 32e des Grundkörpers 22e in ihrer Haupterstreckungsrichtung im Wesentlichen parallel zu einer Längsrichtung 16e erstreckt.

Figur 5b zeigt die Wischvorrichtung in einem montierten Zustand. Die Wischarmadaptereinheit 10e ist auf den Grundkörper 22e der Wischblattadaptereinheit 12e geschoben. Dabei greift die Wischarmadaptereinheit 10e in die Seitenausnehmung 28e des Grundkörpers 22e und bildet mit diesem einen Formschluss. Eine Bewegung der Wischarmadaptereinheit 10e relativ zur Wischblattadaptereinheit 12e parallel zu einer Querrichtung 46e sowie parallel zur Vertikalrichtung 44e ist damit vermieden.

Das Rastmittel 18e greift hinter einen Rückanschlag (nicht dargestellt) der Wischarmadaptereinheit 10e und vermeidet damit eine Bewegung der Wischarmadaptereinheit 10e relativ zur Wischblattadaptereinheit 12e parallel zur Längsrichtung 16e.

## Patentansprüche

1. Wischblattadaptereinheit (12b; 12c), die mit einer Wischarmadaptereinheit (10b - 10c) in einem montierten Zustand einen Formschluss bilden kann, die eine Längsführungseinheit (20b; 20c) zur Führung der Wischarmadaptereinheit (10b; 10c), und ein an der Wischblattadaptereinheit (12b; 12c) beweglich gelagertes Arretierungsmittel (14b; 14c) aufweist,
das dazu vorgesehen ist, die Wischarmadaptereinheit (10b; 10c) im montierten Zustand in ihrer Bewegungsfreiheit zumindest im Wesentlichen in eine Längsrichtung (16b; 16c) einzuschränken, wobei das Arretierungsmittel (14b; 14c) als Rastmittel (18b; 18c) ausgebildet ist, wobei das Rastmittel (18b; 18c) dazu vorgesehen ist, bei einer Montage zumindest im Wesentlichen parallel zu einer Querrichtung (46b; 46c) eines Grundkörpers (22b; 22c) der Wischblattadaptereinheit (12b; 12c) ausgelenkt zu werden, die senkrecht zur Längsrichtung (16b; 16c) und senkrecht zu einer Vertikalrichtung (44b; 44c) steht und parallel zu einer Wischebene verläuft, **dadurch gekennzeichnet, dass** das Rastmittel (18b; 18c) einstückig mit dem Grundkörper (22b; 22c) ausgebildet ist, wobei das Rastmittel (18b; 18c) einen Widerhaken (30b; 30c) aufweist, der keilförmig ausgebildet und am Grundkörper (22b; 22c) an einer Seite angeordnet ist, die einer Keilspitze (40b; 40c) gegenüberliegt, wobei der Grundkörper (22b; 22c) der Wischblattadaptereinheit (12b; 12c) die Längsführungseinheit (20b; 20c) aufweist, die eine Seitenausnehmung (28b; 28c) umfasst, die sich in einer Seitenwand (32b; 32c) des Grundkörpers (22b; 22c) in ihrer Haupterstreckungsrichtung im Wesentlichen parallel zu einer Längsrichtung (16b; 16c) erstreckt.

2. Wischvorrichtung für eine Kraftfahrzeugscheibe mit einer Wischarmadaptereinheit (10b - 10c) und einer Wischblattadaptereinheit (12b - 12c) nach Anspruch 1, **dadurch gekennzeichnet, dass** die Wischarmadaptereinheit (10b - 10c) und die Wischblattadaptereinheit (12b - 12c) in einem montierten Zustand einen Formschluss bilden.

3. Wischvorrichtung nach Anspruch 2, **gekennzeichnet durch** eine Abdeckung (38b; 38c), die in zumindest einem Betriebszustand zumindest zum Großteil von der Wischarmadaptereinheit (10b; 10c) gebildet wird.

## Claims

1. Wiper blade adapter unit (12b; 12c) which can form a form-fitting connection with a wiper arm adapter unit (10b-10c) in a mounted state and which has a longitudinal guide unit (20b; 20c) for guiding the wiper arm adapter unit (10b; 10c), and a locking means (14b; 14c) which is mounted movably on the wiper blade adapter unit (12b; 12c) and which is provided to restrict the wiper arm adapter unit (10b; 10c) in the mounted state in its freedom of movement at least substantially in a longitudinal direction (16b; 16c), wherein the locking means (14b; 14c) is in the form of latching means (18b; 18c), wherein the latching means (18b; 18c) is provided in order, upon installation, to be deflected at least substantially parallel to a transverse direction (46b; 46c) of a basic body (22b; 22c) of the wiper blade adapter unit (12b; 12c), said transverse direction being perpendicular to the longitudinal direction (16b; 16c) and perpendicular to a vertical direction (44b; 44c) and running parallel to a wiping plane, **characterized in that** the latching means (18b; 18c) is formed integrally with the basic body (22b; 22c), wherein the latching means (18b; 18c) has a barb (30b; 30c) which is wedge-shaped and is arranged on the basic body (22b; 22c) on a side which lies opposite a wedge tip (40b; 40c), wherein the basic body (22b; 22c) of the wiper blade adapter unit (12b; 12c) has the longitudinal guide unit (20b; 20c) which comprises a lateral recess (28b; 28c) which in its main direction of extent in a lateral wall (32b; 32c) of the basic body (22b; 22c) extends substantially parallel to a longitudinal direction (16b; 16c).

2. Wiper device for a motor vehicle window, with a wiper arm adapter unit (10b-10c) and a wiper blade adapter unit (12b-12c) according to Claim 1, **characterized in that** the wiper arm adapter unit (10b-10c) and the wiper blade adapter unit (12b-12c) in a mounted state form a form-fitting connection.

3. Wiper device according to Claim 2, **characterized by** a covering (38b; 38c) which, in at least one operating state, is at least mostly formed by the wiper arm adapter unit (10b; 10c).

## Revendications

1. Unité d'adaptation de balai d'essuie-glace (12b; 12c) qui peut former avec une unité d'adaptation de bras d'essuie-glace (10b-10c) dans un état assemblé une liaison par complémentarité de formes qui comporte une unité de guidage longitudinal (20b; 20c) destinée à guider l'unité d'adaptation de bras d'essuie-glace (10b; 10c), et un moyen de blocage (14b; 14c) qui est monté de manière mobile sur l'unité d'adaptation de balai d'essuie-glace (12b; 12c) et qui est prévu pour restreindre la liberté de mouvement de l'unité d'adaptation de bras d'essuie-glace (10b; 10c) à l'état assemblé au moins sensiblement dans une direction longitudinale (16b; 16c), le moyen de blocage (14b; 14c) étant conçu comme moyen d'encliquetage (18b; 18c), le moyen d'encliquetage (18b; 18c) étant prévu pour être dévié pendant l'assemblage au moins sensiblement parallèlement à une direction transversale (46b; 46c) d'un corps de base (22b ; 22c) de l'unité d'adaptation de balai d'essuie-glace (12b; 12c) qui est perpendiculaire à la direction longitudinale (16b; 16c) et perpendiculaire à une direction verticale (44b; 44c) et qui s'étend parallèlement à un plan d'essuyage, **caractérisée en ce que** le moyen d'encliquetage (18b; 18c) est formé d'une seule pièce avec le corps de base (22b ; 22c), le moyen d'encliquetage (18b; 18c) comportant un ardillon (30b ; 30c) qui est en forme de coin et qui est disposé sur le corps de base (22b ; 22c) sur un côté qui est opposé à une pointe de coin (40b; 40c), le corps de base (22b; 22c) de l'unité d'adaptation de balai d'essuie-glace (12b; 12c) comportant l'unité de guidage longitudinal (20b ; 20c) qui comprend un évidement latéral (28b; 28c) qui s'étend dans une paroi latérale (32b ; 32c) du corps de base (22b ; 22c) dans la direction d'extension principale de celle-ci sensiblement parallèlement à une direction longitudinale (16b; 16c).

2. Dispositif d'essuie-glace destiné à une vitre de véhicule automobile et comprenant une unité d'adaptation de bras d'essuie-glace (10b-10c) et une unité d'adaptation de balai d'essuie-glace (12b-12c) selon la revendication 1, **caractérisé en ce que** l'unité d'adaptation de bras d'essuie-glace (10b-10c) et l'unité d'adaptation de balai d'essuie-glace (12b-12c) forment à l'état assemblé une liaison par complémentarité de formes.

3. Dispositif d'essuie-glace selon la revendication 2, **caractérisé par** un couvercle (38b ; 38c) qui, dans au moins un état de fonctionnement, est formé au moins en grande partie par l'unité d'adaptation de bras d'essuie-glace (10b; 10c).
